# FASCICULE DE BREVET EUROPEEN

(11) **EP 3 931 065 B1**
(45) Date de publication et mention de la délivrance du brevet: **10.04.2024**
(21) Numéro de dépôt: 20713716.7
(22) Date de dépôt: 25.02.2020
(51) Int. Cl.: B62D 6/10, G01L 3/10

(54) **CAPTEUR DE POSITION, NOTAMMENT DESTINÉ À LA DÉTECTION DE LA TORSION D'UNE COLONNE DE DIRECTION**
POSITIONSSENSOR, INSBESONDERE ZUR ERFASSUNG DER TORSION EINER LENKSÄULE
POSITION SENSOR, IN PARTICULAR INTENDED FOR DETECTING THE TORSION OF A STEERING COLUMN

(30) Priorité: 25.02.2019 FR 1901904
(43) Date de publication de la demande: 05.01.2022
(73) Titulaire: Moving Magnet Technologies, 25000 Besançon (FR)
(72) Inventeur: FRACHON, Didier, 25000 Besançon (FR)
(74) Mandataire: IP Trust
(86) Numéro de dépôt international: PCT/FR2020/050351
(87) Numéro de publication internationale: WO 2020/174170

(56) Documents cités:
- EP-A1- 3 181 431
- US-A1- 2010 005 909
- US-A1- 2013 152 702
- US-A1- 2016 214 648

## Description

### Domaine de l'invention

La présente invention concerne le domaine des capteurs de position, et plus particulièrement les capteurs de position destinés à la mesure de la torsion d'une colonne de direction, sans que cette application ne soit exclusive.

### Etat de la technique

Le principe général d'un tel capteur est décrit dans le brevet européen EP1774272 de la demanderesse.

Ce capteur de position, notamment destiné à la détection de la torsion d'une colonne de direction, est constitué d'une première structure magnétique rotorique comprenant une pluralité d'aimants, d'une seconde structure statorique comprenant deux couronnes prolongées de dents orientées axialement et imbriquées, et d'une troisième structure collectrice fixe constituée de deux pièces de collecte de flux qui définissent au moins un entrefer dans lequel est placé au moins un élément magnéto sensible.

Les pièces de collecte de flux et les couronnes de stators définissent entre elles une perméance magnétique indépendante de la position radiale et angulaire relative de ladite seconde structure statorique et de ladite troisième structure collectrice.

Un tel capteur permet de réduire, par rapport aux capteurs antérieurs, les pertes de signal magnétique entre la partie statorique et la partie comprenant la sonde de Hall, d'améliorer le rapport signal sur bruit convenable pour effectuer une mesure fiable, d'augmenter la modulation de flux magnétique du capteur sur sa course mécanique et d'apporter une robustesse aux tolérances de positionnement relatives de la partie statorique et de la partie comprenant la sonde de Hall.

On connait dans l'état de la technique la demande de brevet US2016214648 concerne un dispositif pour véhicule automobile comportant un capteur de couple pour détecter un couple appliqué à un arbre de direction du véhicule automobile et un capteur d'angle de braquage pour détecter un angle de braquage actuel de l'arbre de direction. Le dispositif de capteur de couple comporte un stator magnétique conçu pour conduire le flux magnétique d'un aimant à au moins un conducteur de flux et, à travers celui-ci, à au moins un capteur magnétique du dispositif de capteur de couple, et deux parties de stator disposées de manière à être déplacées dans la direction axiale l'une par rapport à l'autre, chacune comprenant un élément de bord annulaire s'étendant dans la direction radiale. Le dispositif de détection de l'angle de braquage comprend au moins un élément de transmission de rotation avec un aimant permanent et un détecteur de champ magnétique pour détecter un mouvement.

La demande de brevet US2013152702 concerne un dispositif détecteur à susceptibilité relativement réduite aux anomalies, destiné à la mesure d'un couple appliqué sur un arbre, ledit arbre présentant une première section et une seconde section, ces deux sections pouvant être mutuellement entraînées en rotation, dispositif comprenant au moins un codeur magnétique disposé sur la première section d'arbre, et un stator disposé sur la seconde section d'arbre, le stator, présentant deux éléments de stator dotés chacun de doigts en saillie. L'invention est caractérisée en ce qu'il est prévu sur la seconde section d'arbre, au moins un second stator supplémentaire présentant, de même, deux éléments de stator et dotés chacun de doigts en saillie, et en ce que ces stators sont associés au codeur magnétique.

Le brevet EP3181431 un dispositif de détection de couple pour détecter un couple appliqué sur un arbre, en particulier pour détecter un couple appliqué sur un arbre de direction d'un véhicule automobile, dans lequel le dispositif de détection de couple présente un dispositif d'émission doté d'un élément d'émission et un premier dispositif de réception doté d'au moins un premier capteur magnétique. Le dispositif de détection de couple présente au moins un conducteur de flux pour concentrer un flux magnétique d'au moins un champ parasite au niveau du dispositif de détection de couple et pour retransmettre le flux magnétique concentré du champ parasite au dispositif de réception supplémentaire en particulier audit au moins un capteur magnétique supplémentaire.

La demande de brevet US2010005909 décrit une solution pour réduire la sensibilité aux perturbations liées aux champs magnétiques externes en disposant au moins un deuxième stator supplémentaire sur la section d'arbre du premier stator. Ce stator supplémentaire comporte également deux éléments statoriques comportant chacun des doigts saillants. Cette solution prévoit une détection redondante du couple même sans plusieurs capteurs de couple et/ou sans plusieurs éléments capteurs, le champ magnétique des deux les circuits magnétiques peuvent être détectés et évalués ensemble ou conjointement, ou séparément. Cette redondance des deux circuits magnétiques se traduit par une fiabilité et une sécurité de défaillance relativement élevées de l'agencement de capteurs.

### Inconvénients de l'art antérieur

Ces améliorations ne règlent cependant pas la sensibilité aux champs magnétiques et électromagnétiques extérieurs venant perturber le champ utile détecté par la sonde de Hall.

En particulier, lorsque le capteur est placé dans un environnement comportant des masses magnétiques ou des sources de rayonnement électromagnétique, il subit des perturbations faussant le signal fourni par le capteur.

### Solution apportée par l'invention

Afin de répondre à ces inconvénients, la présente invention a pour but, non pas de créer un blindage magnétique au champ perturbateur extérieur comme l'homme de métier y serait conduit, mais à créer sur chaque structure collectrice de flux deux zones de collecte de ce champ perturbateur, respectivement nommées zone de collecte primaire et zone de collecte secondaire, agencées de manière particulière par rapport à l'entrefer de mesure.

Le principe de l'invention consiste en effet à amener le champ collecté dans l'entrefer de mesure mais selon deux sens de circulation différents permettant au final d'annuler la composante globale du champ perturbateur. Dans cette optique, il est recherché, préférentiellement mais non limitativement, de collecter autant de champ perturbateur avec la zone de collecte primaire qu'avec la zone de collecte secondaire et d'inverser les deux champs au niveau de l'entrefer, relativement l'un par rapport à l'autre, grâce au positionnement relatif de ces deux zones tout en maximisant le flux utile dans cet entrefer.

Plus particulièrement, en positionnant une zone de collecte primaire d'un côté du plan médian transversal définissant l'entrefer et une zone de collecte secondaire de l'autre côté du plan médian transversal définissant l'entrefer, il est créé, par combinaison de deux structures collectrices de flux, une zone de rebroussement du champ magnétique inversant le sens du champ magnétique collecté traversant l'entrefer. Le flux collecté par les zones de collecte primaire et secondaire de la première structure collectrice s'annule ou se minimise en coopération avec le flux collecté par les zones de collecte primaire et secondaire de la deuxième structure, comme il sera mieux apprécié sur les différentes figures.

L'invention concerne selon son acception la plus générale un capteur de position présentant les caractéristiques énoncées dans la revendication 1.

Ce capteur de position est notamment destiné à la détection de la torsion d'une colonne de direction.

Il est constitué d'une première structure magnétique aimantée rotorique comprenant une pluralité d'aimants, d'une seconde structure statorique comprenant deux couronnes prolongées de dents orientées axialement et imbriquées, et d'une troisième structure collectrice fixe constituée de deux pièces de collecte de flux qui définissent au moins un entrefer dans lequel est placé au moins un élément magnéto sensible, lesdites pièces de collecte de flux et lesdites couronnes dentées définissant entre elles une perméance magnétique indépendante de la position radiale et angulaire relative de ladite seconde structure statorique par rapport à ladite troisième structure collectrice, lesdites pièces de collecte comprenant chacune un secteur angulaire de collecte caractérisé en ce que chaque pièce de collecte présente au moins une zone de collecte primaire continuée par au moins un prolongement présentant au moins une zone de collecte secondaire, en ce que lesdites zones de collecte secondaire sont terminées par des épanouissements plans formant les deux pôles dudit entrefer et en ce que le plan médian transversal dudit entrefer coupe au moins un desdits prolongements.

L'invention concerne aussi un capteur présentant les caractéristiques suivantes, prises isolément ou en toutes combinaisons techniquement envisageables :
- Ledit plan médian est parallèle aux plans des zones de collecte primaire.
- Lesdites zones de collecte primaire sont parallèles aux zones de collecte secondaire.
- Ledit prolongement s'étend axialement et perpendiculairement au plan de ladite zone de collecte primaire au-delà dudit plan médian transversal.
- Ledit prolongement est continué par une section plane formant une zone de collecte secondaire parallèle au plan de la zone de collecte primaire.
- Ladite zone de collecte secondaire présente une forme parallélépipédique.
- Deux côtés de ladite zone de collecte secondaire sont prolongés par une patte orientée en direction du secteur angulaire de collecte et présentant un épanouissement plan, formant un pôle dudit entrefer.
- L'une desdites zones de collecte primaire est prolongée par au moins une zone de collecte secondaire s'étendant de part et d'autre du prolongement.
- Au moins une desdites zones de collecte secondaire définit une zone de rebroussement avec des surfaces tangentes parallèles aux zones de collecte primaire.
- Ledit plan médian transversal s'étend entre la zone de collecte primaire et lesdites surfaces tangentes.
- Lesdites surfaces tangentes se prolongent en direction de l'entrefer et de la zone de collecte primaire se terminant par un épanouissement pour former le deuxième pôle des entrefers.
- Ladite troisième structure collectrice comprend deux zones de collecte secondaire, la première zone de collecte secondaire étant placée dans un plan parallèle au plan de ladite zone de collecte primaire auquel elle est couplée magnétiquement par l'intermédiaire de la zone de collecte secondaire dont une extrémité frontale définit un des pôles de l'entrefer, ledit plan médian transversal de l'entrefer étant situé entre cette première zone de collecte secondaire et ladite zone de collecte primaire, la deuxième zone de collecte secondaire étant placée dans un plan parallèle au plan de ladite zone de collecte primaire auquel elle est couplée magnétiquement par l'intermédiaire d'épanouissements plan dont une extrémité frontale définit l'autre des pôles de l'entrefer, ledit plan médian transversal de l'entrefer étant situé entre cette première zone de collecte secondaire et ladite zone de collecte primaire.
- La surface totale de la zone de collecte secondaire est égale à la surface totale de la zone de collecte primaire.

L'invention se réfère aussi à un dispositif de détection de position absolue d'une colonne de direction présentant les caractéristiques énoncées par la revendication indépendante portant sur un dispositif de détection de position absolue d'une colonne de direction.

### Description détaillée d'exemples non limitatifs de l'invention

Les différentes spécificités du capteur d'angle optimisé apparaîtront plus clairement au travers de la description des figures suivantes :
- [Fig 1A]

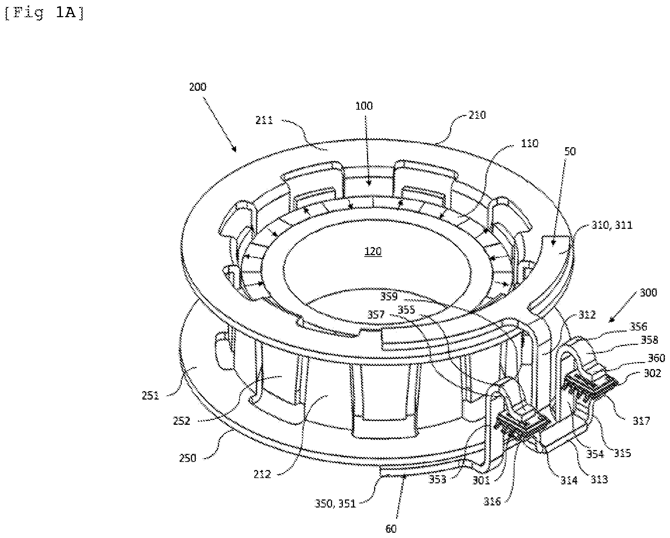

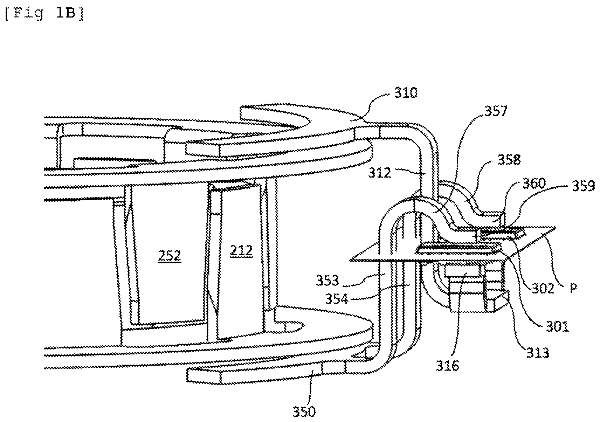

- [Fig 1B] les figures 1A et 1B représentent deux vues en perspective d'un premier exemple de réalisation d'un capteur angulaire selon l'invention,
- [Fig 2A]
- [Fig 2B] les figures 2A et 2B représentent deux vues en perspective d'un deuxième exemple de réalisation d'un capteur angulaire selon l'invention,
- [Fig 3] la figure 3 représente une vue en perspective d'un troisième exemple de réalisation d'un capteur angulaire selon l'invention,
- [Fig 4] la figure 4 représente une vue en perspective d'un quatrième exemple de réalisation d'un capteur angulaire selon l'invention,
- [Fig 5] la figure 5 représente une vue en perspective d'un cinquième exemple de réalisation d'un capteur angulaire selon l'invention,
- [Fig 6] la figure 6 représente une vue en perspective d'un sixième exemple de réalisation d'un capteur angulaire selon l'invention,
- [Fig 7] la figure 7 représente une vue en perspective d'un septième exemple de réalisation d'un capteur angulaire selon l'invention,
- [Fig 8a]

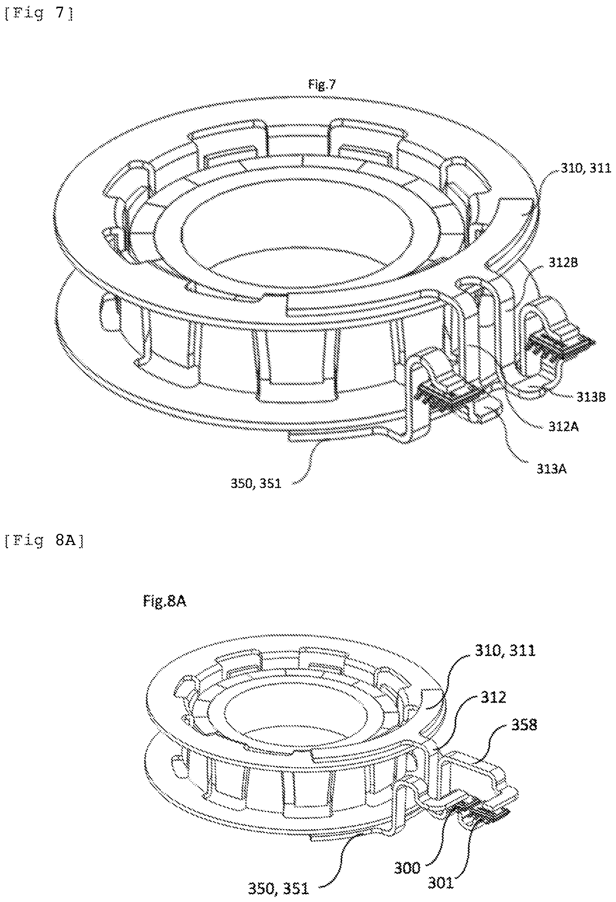

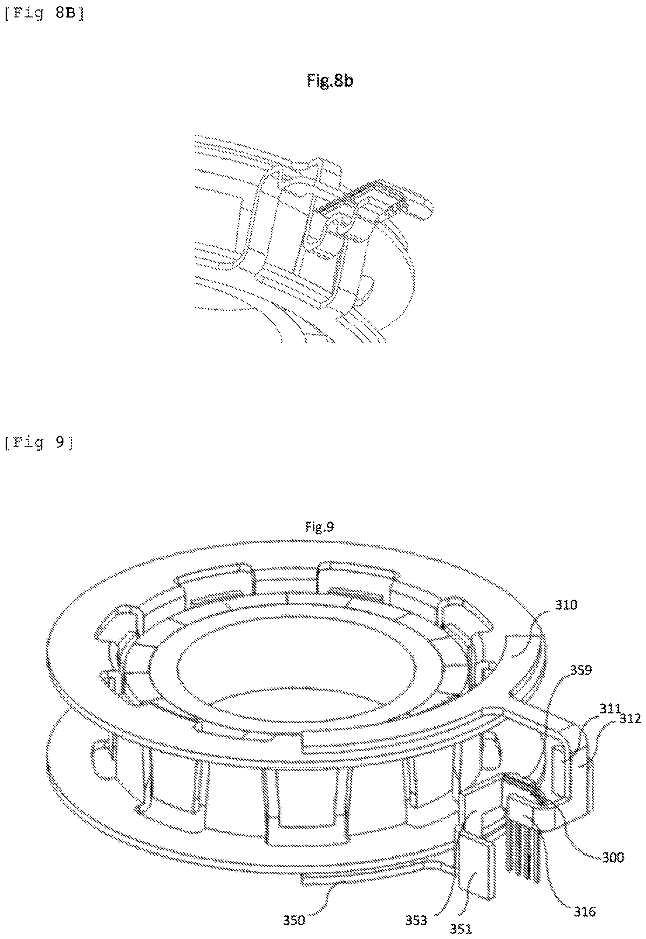

- [Fig 8b] les figures 8a et 8b représentent deux vues en perspective, respectivement avant et arrière, d'un huitième exemple de réalisation d'un capteur angulaire selon l'invention,
- [Fig 9] la figure 9 représente une vue en perspective d'un neuvième exemple de réalisation d'un capteur angulaire selon l'invention,

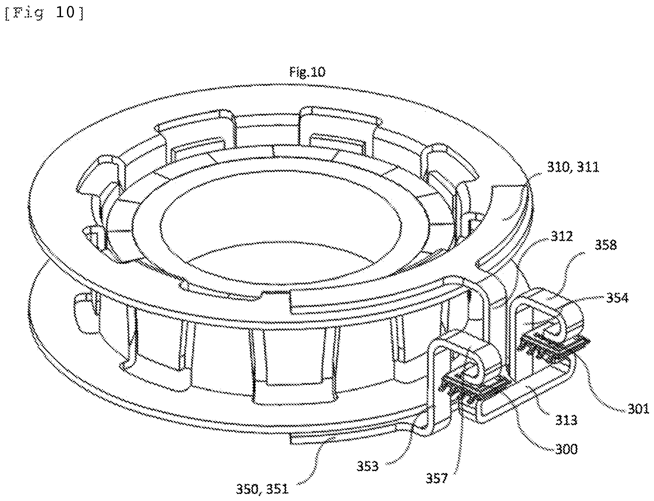

- [Fig 10] la figure 10 représente une vue en perspective d'un dixième exemple de réalisation d'un capteur angulaire selon l'invention,

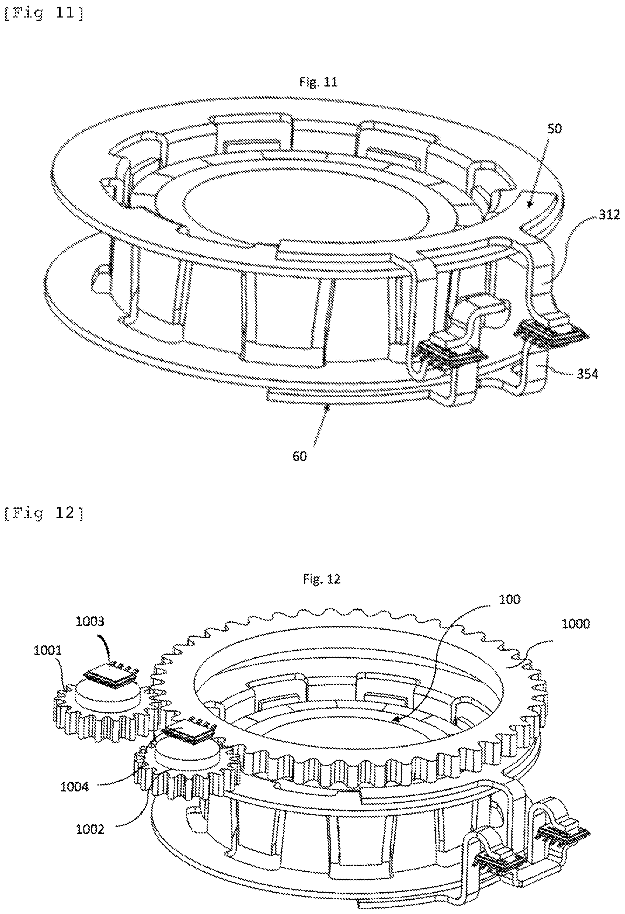

- [Fig 11] la figure 11 représente une vue en perspective d'un onzième exemple de réalisation d'un capteur angulaire selon l'invention,
- [Fig 12] la figure 12 représente une vue en perspective d'un douzième exemple de réalisation d'un capteur angulaire selon l'invention couplé à un dispositif de détection de position absolu de la colonne de direction,

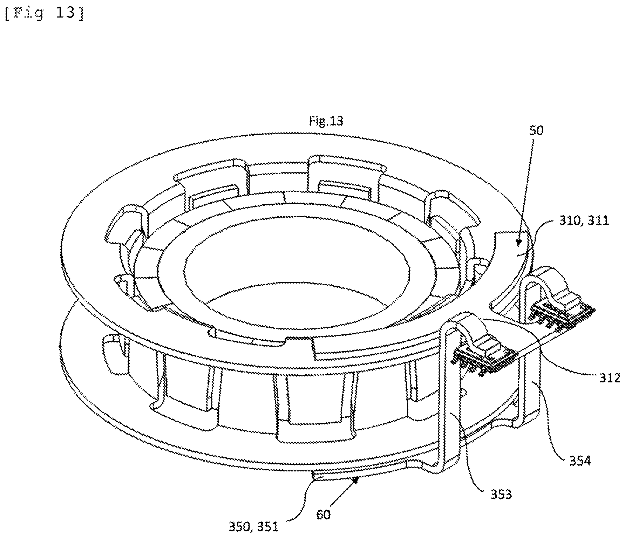

- [Fig 13] la figure 13 représente une vue en perspective d'un autre exemple de réalisation d'un capteur angulaire selon l'invention.
- [Fig 14A]
- [Fig 14B]
- [Fig 14C]
- [Fig 14D]

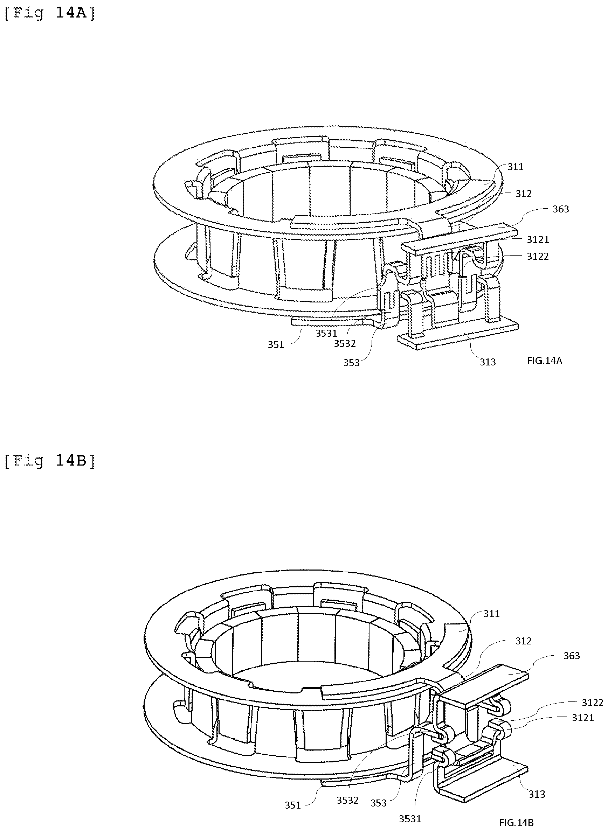

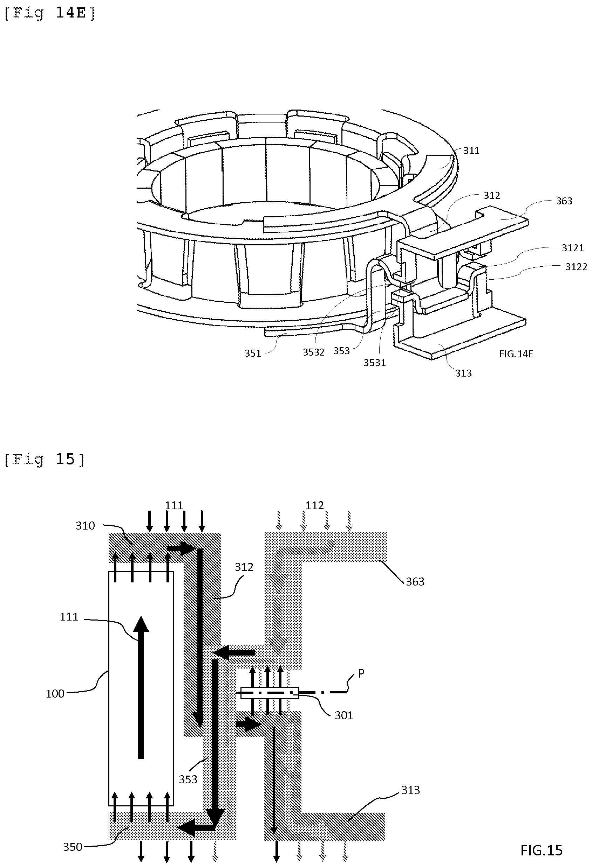

- [Fig 14E] les figures 14A à 14E présentent des vues en perspective de modes de réalisation de la liaison mécanique et magnétique entre les zones de collecte primaires et les zones de collecte secondaires.

Dans l'ensemble des figures, il est considéré que les zones de collecte présentent des surfaces de collecte actives globalement perpendiculaires à l'axe du capteur, bien que leur orientation puisse être différente. Les surfaces latérales jouent un rôle moindre par rapport à ces surfaces de collecte. De même, pour une meilleure compréhension des éléments et de leurs fonctions, il doit être considéré par simplification que le champ perturbateur est globalement orienté axialement, ou orthoradialement dans le cas de la figure 9, bien que l'orientation de ce champ n'influence pas les performances du capteur, les zones de collecte étant ferromagnétiques et courbant les lignes de champ perpendiculairement à leur surface à l'interface fer-air.

### Description du premier exemple de réalisation

Les figures 1A et 1B représentent des vues en perspective d'un premier exemple de réalisation d'un capteur angulaire destiné à réaliser une mesure sur une course d'environ huit degrés d'un arbre de torsion équipant une colonne de direction. Les dimensions qui sont données ci-dessous sont à titre indicatif et peuvent être modifiées en fonction des différents cahiers des charges.

Le capteur se compose de trois structures :
- une structure aimantée (100) rotorique, entraînée par l'arbre de la colonne de direction,
- une structure statorique (200) formée de deux couronnes dentées (210, 250),
- une structure collectrice de flux (300) comprenant deux sondes magnétosensibles (301, 302) et formée de deux pièces de collectes (50, 60).

La structure aimantée (100) rotorique est composée d'une alternance d'aimants formant un aimant tubulaire à N paires de pôles (110) de hauteur 7 millimètres, aimantés préférentiellement, mais non limitativement, radialement pour former une bague de diamètre intérieur 34.8 millimètres et de diamètre extérieure 37.8 millimètres, montée sur une culasse cylindrique (120) de même hauteur que l'aimant et de diamètre intérieur 31 millimètres.

La structure statorique (200) comporte deux couronnes dentées (210, 250) montées en vis-à-vis et décalées angulairement d'un angle correspondant au pas polaire de l'aimant.

Chacune de ces couronnes dentées (210, 250) est constituée d'une couronne circulaire (211, 251) de diamètre intérieur 39,2 millimètres et de diamètre extérieur 49 millimètres prolongée de M dents (212, 252) se présentant comme des portions de cylindre de hauteur 7 millimètres, orientées axialement de manière à collaborer avec les faces extérieures des aimants constituant la première structure aimantée rotorique (100).

Les dents (212, 252) font apparaître une largeur angulaire vue de l'axe du capteur qui est croissante, sur une partie, de 23 degrés à l'extrémité, à 26 degrés au niveau du pied, de façon à augmenter la section de passage du flux dans le pied de dent sachant que l'épaisseur de la feuille de tôle utilisée est de 0.8 millimètres.

Les deux stators (210, 250) sont imbriqués sur une distance de 4.25 millimètres de sorte que la distance inter stator, entre les deux couronnes (211, 251), atteint 9.75 millimètres.

Ces couronnes circulaires (211, 251) sont aptes à transmettre le flux issu de la structure aimantée (100) aux pièces de collecte (50, 60) comprenant des secteurs angulaires de collecte (310, 350) qui constituent la structure collectrice (300) et auxquels elles font face à travers un entrefer de 0.7 millimètres.

De plus, les secteurs angulaires de collecte (310, 350) sont dimensionnés de façon à recouvrir une partie des couronnes dentées (210, 250), sur un arc d'environ 100° dans l'exemple décrit.

Ce dimensionnement conduit à une insensibilité au décalage radial de la structure statorique (200) par rapport à la structure collectrice (300) tant que celui-ci reste inférieur à 0.5 millimètres au rayon.

Une ou deux branches - ou prolongements - (312, 353, 354) de largeur 4.5 millimètres prolongent les secteurs angulaires de collecte (310, 350) et permettent de refermer le flux dans deux entrefers de mesure de hauteur 1.75 millimètres situés radialement à l'extérieur des stators (210, 250) et dans lesquels deux sondes magnétosensibles (301, 302) sont placées et maintenues par un circuit imprimé non représenté.

Les secteurs angulaires (310, 350) forment les zones de collecte principale du capteur, c'est-à-dire les zones de collecte du flux utile au capteur, flux produit par la pluralité d'aimants (100).

Dans ce cas d'exemple, les secteurs angulaires (310, 350) forment aussi les zones de collecte primaire (311, 351) collectant le flux perturbateur si l'on considère que ce flux perturbateur présente une composante axiale.

Dans ce cas particulier, la collection est réalisée à l'extérieur des couronnes dentées (210, 250) pour augmenter la sensibilité des sondes (301, 302), ce qui nécessite un capteur plus haut que dans le cas d'une collection intérieure mais permet de gagner environ vingt pour cent sur la sensibilité du capteur.

Les prolongements (312, 353, 354) constituent des concentrateurs de flux amenant le flux magnétique collecté par les secteurs angulaires de collecte respectivement (310, 350) vers les entrefers dans lesquels sont placées les sondes magnétosensibles (301, 302). Le flux utile et le flux perturbateur sont ainsi amenés vers l'entrefer de mesure.

Pour le premier secteur angulaire de collecte (310), le prolongement (312) présente la forme d'une lame s'étendant axialement, perpendiculairement au plan du secteur angulaire (310), ce plan étant considéré comme le plan médian dudit secteur. Ce prolongement (312) s'étend au-delà du plan médian transversal (P) fictif passant par les entrefers et les capteurs magnétosensibles (301, 302), ce plan (P) étant ici parallèle au plan du secteur angulaire (310).

Ce prolongement (312) est ensuite continué par une section plane formant une zone de collecte secondaire (313) parallèle au plan du secteur angulaire (310). Cette zone de collecte secondaire (313) présente une forme rectangulaire, cette forme n'étant pas limitative, avec des côtés ayant un axe correspondant à une direction radiale du capteur et l'autre axe étant parallèle à une direction tangentielle de la structure statorique (200).

De part et d'autre, cette zone de collecte secondaire (313) est elle-même prolongée par deux pattes respectivement (314, 315) orientées en direction du secteur angulaire (310) et présentant chacune un épanouissement plan (316, 317), dans un plan transversal et formant le premier pôle des entrefers de mesure. Ces épanouissements (316, 317) constituent aussi, comme dans tous les exemples de réalisation, une zone de collecte additionnelle collectant aussi une partie du flux perturbateur.

Le plan médian transversal (P) fictif des entrefers est positionné entre la zone de collecte secondaire (313) et la zone de collecte primaire (311) et intersecte le prolongement (312).

Pour le deuxième secteur angulaire de collecte (350), deux prolongements (353, 354) s'étendent de part et d'autre du prolongement (312) du secteur angulaire (310) opposé.

Chacun de ces deux prolongements (353, 354) présente la forme d'une lame s'étendant axialement, jusqu'à une zone de rebroussement dont les surfaces tangentes (355, 356) définissent des zones de collecte secondaire (357, 358). Dans l'esprit de l'invention, le rebroussement peut être réalisé par la forme courbée des zones de collecte, mais il est plus généralement réalisé par le positionnement relatif des zones de collecte primaire et secondaire par rapport au plan médian (P) de l'entrefer comme décrit ci-dessus et qui force le flux à suivre l'entrefer selon un sens opposé.

Le plan médian transversal (P) fictif passant par les entrefers contenant les deux sondes magnétosensibles (301, 302) s'étend entre la zone de collecte primaire (351) et les zones de collecte secondaire (357, 358) et intersecte les prolongements respectivement (353, 354).

Les prolongements (353, 354) se poursuivent, après rebroussement, en direction de l'entrefer et du secteur angulaire de collecte (350) et se terminent par un épanouissement respectivement (359, 360), dans un plan transversal pour former le deuxième pôle des entrefers. Ces épanouissements (359, 360) constituent aussi une zone de collecte secondaire collectant aussi une partie du flux perturbateur.

Ainsi, le flux magnétique perturbateur collecté par la zone de collecte primaire (311) et éventuellement le prolongement (312), mais aussi par la zone de collecte secondaire (313) avec les épanouissements (316, 317) de la première pièce (50) est inversé dans l'entrefer, par la forme de rebroussement donnée aux surfaces de collecte additionnelle, par rapport à l'orientation initiale du champ perturbateur. Le flux magnétique perturbateur collecté par les collecteurs secondaires (357, 358) avec les épanouissements (359, 360) de la deuxième pièce (60) est orienté dans l'entrefer suivant le même sens que l'orientation initiale du champ perturbateur. Ainsi, les deux sens de circulation opposés de champ perturbateur dans l'entrefer contribuent à minimiser voire annuler ce champ dans l'entrefer de mesure.

De même, symétriquement, le flux magnétique perturbateur collecté par la zone de collecte primaire (350) et éventuellement les prolongements (353, 354) de la deuxième pièce de collecte (60) est inversé dans l'entrefer, par la forme de rebroussement donnée aux surfaces de collecte secondaire, par rapport à l'orientation initiale du champ perturbateur au niveau des surfaces de collecte principale. Le flux magnétique perturbateur collecté par le collecteur secondaire (313) de la première pièce de collecte (50) est orienté dans l'entrefer suivant le même sens que l'orientation initiale du champ perturbateur. Ainsi, les deux sens de circulation opposés de champ perturbateur dans l'entrefer contribue à minimiser voire annuler ce champ dans l'entrefer de mesure.

La somme des surfaces de collecte de la zone de collecte primaire (311) et éventuellement du prolongement (312) n'est pas égale à la surface de collecte des zones de collecte secondaires (357, 358) tout comme la somme des surfaces de collecte de la zone de collecte primaire(351) et éventuellement des prolongements (353, 354) n'est pas égale à la surface de collecte de la zone de collecte additionnelle (313), ce qui a pour conséquence de ne pas totalement annuler le champ perturbateur extérieur au niveau des entrefers. Cette solution reste néanmoins efficace dans le but de minimiser la composante de champ perturbateur mesuré. Dans le but d'égaliser ces surfaces on peut aisément jouer par exemple sur la largeur des zones de collecte secondaire. Les variantes de réalisation décrites ci-après améliorent les performances en illustrant des moyens cherchant à égaliser les surfaces de collecte primaire et secondaire.

### Description d'autres exemples de réalisation

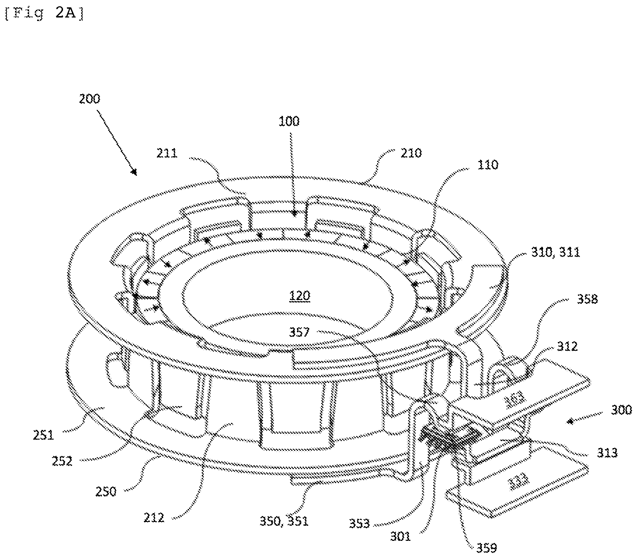

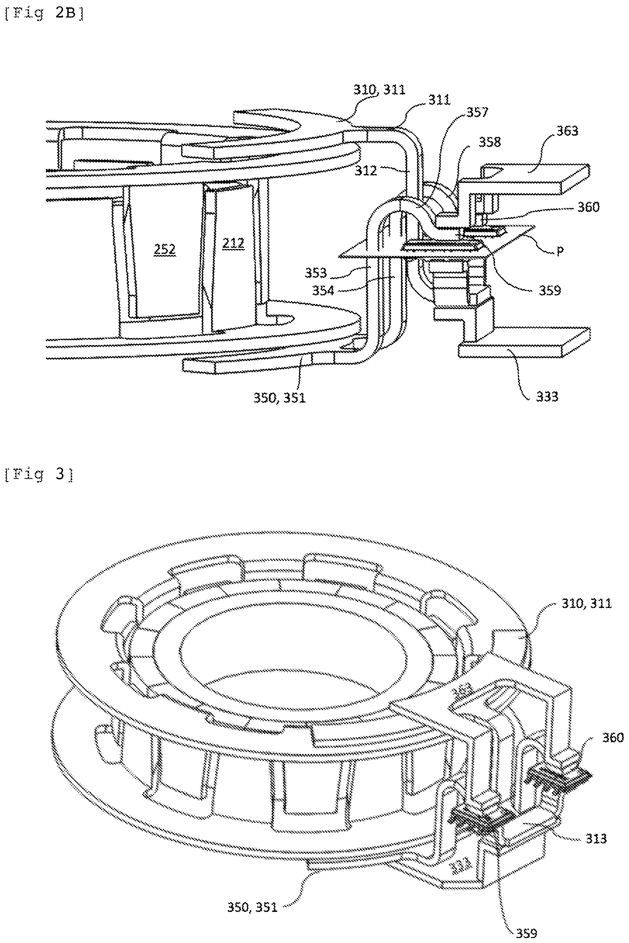

Les figures 2A et 2B représentent des vues en perspective d'une variante de réalisation, différente du premier exemple décrit ci-avant, par l'adjonction de deux zones de collecte secondaire (333, 363).

La première zone de collecte secondaire (333) est formée dans cet exemple par une tôle rectangulaire en un matériau ferromagnétique doux placée dans un plan parallèle au plan du secteur angulaire (310) auquel elle est couplée magnétiquement par l'intermédiaire de la zone de collecte secondaire (313) dont l'extrémité frontale définit un des pôles de l'entrefer. Le plan médian transversal (P) fictif de l'entrefer est situé entre cette première zone de collecte secondaire (333) et le secteur angulaire (310).

La surface de cette première zone de collecte secondaire (333) est approximativement égale à la surface de la zone de collecte primaire (351) et des prolongements (353, 354). En effet, par rapport à un champ extérieur perturbateur, la zone de collecte primaire (351) et les prolongements (353, 354)contribuent à collecter et amener le champ extérieur au niveau des sondes (301, 302) dans un sens orienté ici du haut vers le bas, alors que la zone de collecte secondaire (333) collecte et amène le champ magnétique extérieur au niveau des sondes (301, 302) dans un sens orienté du bas vers le haut. L'égalisation desdites zones (351, 353, 354 et 333) permet ainsi de minimiser la composante de champ magnétique extérieur perturbateur en collectant autant de flux dans les deux sens de circulation décrits.

La deuxième zone de collecte secondaire (363) est formée, dans cet exemple, par une tôle rectangulaire en un matériau ferromagnétique doux placée dans un plan parallèle au plan de la zone de collecte primaire (351) auquel elle est couplée magnétiquement par l'intermédiaire des épanouissements plan (359, 360) dont l'extrémité frontale de chacun définit l'autre des faces de l'entrefer. Le plan médian transversal (P) fictif de l'entrefer est situé entre cette seconde zone de collecte secondaire (363) et la zone de collecte primaire (351).

La surface de cette zone de collecte secondaire (363) et des zones de collecte secondaire (357, 358) est approximativement égale à la surface de la zone de collecte primaire (311, 312) et de la zone de collecte secondaire (313). En effet, par rapport à un champ extérieur perturbateur, la zone de collecte primaire (311), le prolongement (312) et la zone de collecte secondaire (333) contribuent à collecter et amener le champ extérieur au niveau des sondes (301, 302) dans un sens orienté ici du bas vers le haut, alors que la zone de collecte secondaire (363) et les zones de collecte secondaire (357, 358) amènent le champ magnétique extérieur au niveau des sondes (301, 302) dans un sens orienté du haut vers le bas. L'égalisation desdites zones (363, 357, 358 et 310, 312) permet ainsi de minimiser la composante de champ magnétique extérieur perturbateur.

La figure 3 représente une vue en perspective d'une variante de réalisation, qui diffère de l'exemple de réalisation des figures 2A et 2B, par le positionnement des deux zones de collecte secondaire (333, 363) en surplomb des zones de collecte primaire (311, 351) dans le but de rendre le capteur plus compact en diamètre.

La première zone de collecte secondaire (333) est formée dans cet exemple, par une tôle en un matériau ferromagnétique doux placée à l'aplomb de la zone de collecte principale (350) et située dans un plan parallèle au plan de la zone de collecte primaire (311) auquel elle est couplée magnétiquement par l'intermédiaire de la zone de collecte secondaire (313) dont une extrémité frontale définit un des pôles de l'entrefer. Le plan médian (non montré) de l'entrefer est situé entre cette première zone de collecte secondaire (333) et la zone de collecte primaire (311).

La deuxième zone de collecte secondaire (363) est formée, dans cet exemple, par une tôle en un matériau ferromagnétique doux placée à l'aplomb de la zone de collecte primaire (311) et située dans un plan parallèle au plan de la zone de collecte primaire (351) auquel elle est couplée magnétiquement par l'intermédiaire des épanouissements plan (359, 360) dont une extrémité frontale de chacun définit l'autre des pôles de l'entrefer. Le plan médian (non montré) de l'entrefer est situé entre cette première zone de collecte secondaire (363) et la zone de collecte primaire (351).

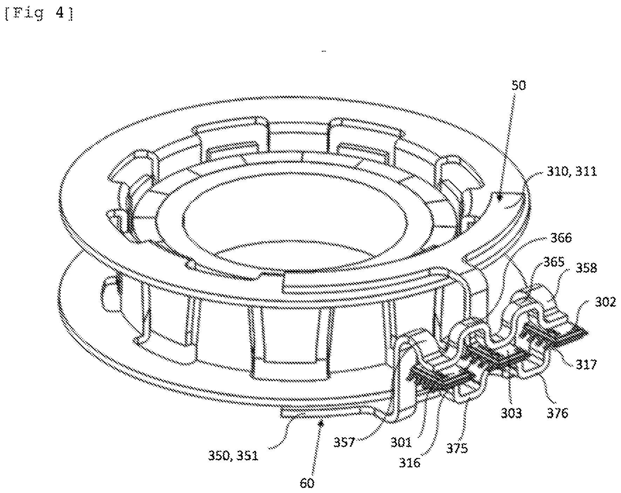

La figure 4 présente un quatrième mode de réalisation d'un capteur selon l'invention. Par rapport au mode de réalisation présenté en figures 1A et 1B, les zones de collecte secondaire (357, 358), prolongements du secteur angulaire de collecte (350), sont reliées entre elles par une tôle ferromagnétique formant deux zones de collecte secondaire (365, 366) et les zones de collecte secondaire (316, 317), prolongements du secteur angulaire de collecte (310), sont reliées entre elles par une tôle ferromagnétique formant deux zones de collecte secondaire (375, 376). Cette réalisation permet notamment de placer une troisième sonde magnétosensible (303) pour créer une redondance d'information et augmenter la surface des zones de collecte secondaire globale par rapport au cas de réalisation des figures 1A et 1B. Les plans médians transversaux (non montrés) des entrefers au niveau des sondes (301, 302, 303) sont positionnés entre les zones de collecte primaire (311, 351) d'une part et les zones de collecte secondaire (357, 358, 365, 366, 375, 376) d'autre part. Les plans médians sont préférentiellement coplanaires sans que cela soit nécessaire, les plans pouvant être décalés axialement l'un par rapport à l'autre pour des raisons éventuelles de réalisation. De même, la tôle ferromagnétique créant les zones de collecte secondaire (365, 366) d'une part et (375, 376) d'autre part, sont préférentiellement partie intégrante des collecteurs respectivement (50, 60), sans que cela soit nécessaire pour l'invention. Elles peuvent en effet être des tôles disjointes rapportées.

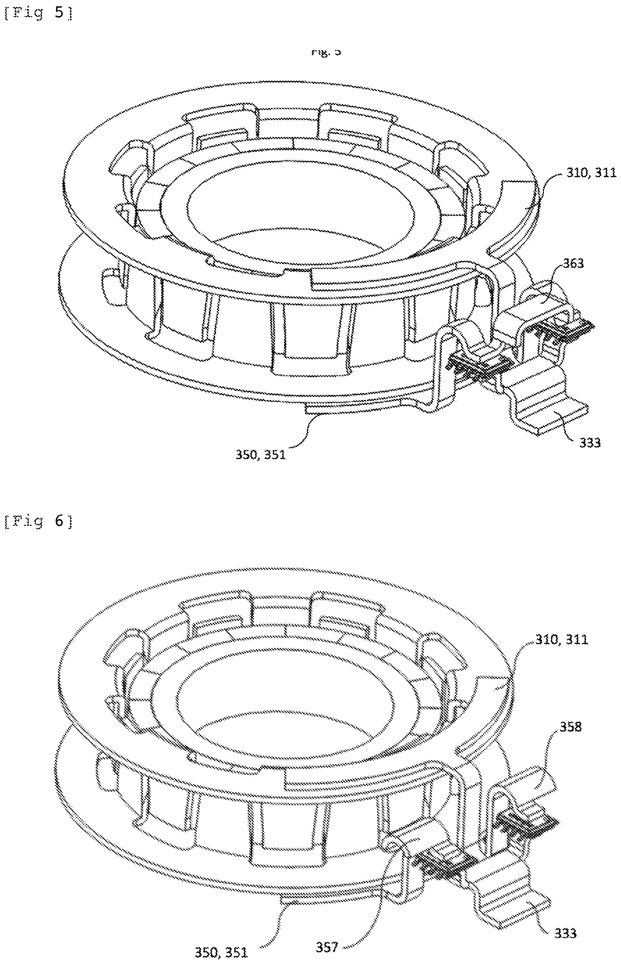

La figure 5 est une variante de réalisation similaire à celle exposée en figures 2A et 2B mais elle s'en démarque en ce que les zones de collecte secondaire (333, 363) sont des tôles qui sont partie intégrante des pièces de collecte, respectivement (50, 60), et en ce que les formes générales desdites zones de collecte secondaire (333, 363) sont différentes de celles exposées en figures 2A et 2B générant des surfaces de collecte différentes. Cette dernière caractéristique illustre la liberté permise par l'invention pour définir ces zones de collecte secondaire (333, 363).

En figure 6 est présentée une variante de réalisation pour laquelle la zone de collecte primaire (311) est prolongée par une zone de collecte secondaire (333), de manière similaire à la variante présentée en figure 5. Cependant, la zone de collecte primaire (351) est prolongée par deux zones de collecte secondaire (357, 358) qui s'épanouissent de manière orthoradiale de manière à augmenter la surface de collection desdites zones de collecte secondaire (357, 358).

La figure 7 présente une variante de réalisation similaire à celle présentée en figure 1A et 1B à la différence que la zone de collecte primaire (311) est ici prolongée par deux prolongements (312A, 312B) qui définissent deux zones de collecte secondaire (313A, 313B).

En figures 8A et 8B, les deux sondes utilisées (300, 301) sont positionnées sur un même rayon, la deuxième sonde (301) étant plus éloignée radialement que la première sonde (300) de la pluralité d'aimants. Pour cela, la zone de collecte primaire (311) est prolongée au-delà du prolongement (312) par une zone de collecte secondaire (358) qui s'étend radialement au-dessus de la première sonde (300).

La figure 9 illustre un mode de réalisation où la sonde est orientée de manière à présenter son axe de sensibilité à 90° par rapport aux autres réalisations présentées, l'axe de sensibilité étant alors orthoradial et perpendiculaire à l'axe de rotation du capteur. Dans cet exemple non imitatif, les secteurs angulaires (310, 350) présentent des prolongements (312, 353) s'étendant axialement et se terminant suivant deux épanouissements plans (316, 359) orientées orthoradialement définissant l'entrefer de mesure dans lequel est placée la sonde (300). Dans cet exemple de réalisation, les secteurs angulaires (310, 350) sont les zones de collecte principale du flux mais ne sont pas destinées particulièrement à être des zones de collecte primaire. En effet, la sonde (300) est, dans cette configuration, sensible à une composante orthoradiale du champ perturbateur et les secteurs angulaires (310, 350) ne participent à la collecte du flux perturbateur que par leur tranche.

Les prolongements (312, 353) présentent des surfaces de collecte primaire (311, 351) afin de collecter le flux perturbateur et l'amener dans l'entrefer de mesure dans un sens opposé à celui collecté par les deux épanouissements plans (316, 359), formant des zones de collecte secondaire.

La figure 10 présente une variante de réalisation similaire à celle présentée en figures 1A et 1B à la différence que les prolongements (312, 353, 354) sont continués par des zones de collecte secondaire (313, 357, 358) dont les terminaisons sont recourbées. Les extrémités des zones de collecte secondaire (357, 358) sont recourbées vers le bas et en direction du centre de la pluralité d'aimants alors que les extrémités de la zone de collecte secondaire (313) s'étendent parallèlement à l'axe de rotation et sont recourbées vers le haut et en se rapprochant l'une de l'autre. Cette variante permet de modifier la collecte de flux additionnelle.

Il est entendu, au sens de la présente invention, que les différentes variantes présentées ci-dessus ne sont que quelques exemples de mise en œuvre. Il est bien sûr possible d'envisager des variantes supplémentaires en combinant, au moins en partie, les différentes variantes montrées en termes de forme, taille et positionnement relatif, et ce sans sortir du cadre de l'invention. Ainsi on peut aussi imaginer n'avoir qu'un entrefer sur les deux présentant une inversion du flux utile par rapport au flux perturbateur et alors réaliser une composition algébrique des 2 signaux lus par les 2 sondes afin d'annuler la composante de flux de perturbation. Cette dernière variante est illustrée en figure 11. Les prolongements (312, 354) les plus à droite des pièces de collecte (50, 60) sont identiques à ceux de l'art antérieur, l'inversion de flux ne se faisant qu'à partir des prolongements situés les plus à gauche selon les enseignements cités plus haut.

La figure 12 présente l'association d'un capteur de position tel que défini par l'invention avec un dispositif de détection de position absolue. Dans cet exemple non limitatif, un capteur de position tel que défini en figures 1A, 1B est associé à un dispositif semblable à celui décrit dans le document WO2012084288. Ce dernier dispositif, utilisant un principe de mesure par vernier magnétique, est destiné à déterminer la position absolue sur plusieurs tours de la colonne de direction. Le dispositif de type vernier comprend notamment une roue dentée principale (1000) solidaire préférentiellement de la structure aimantée (100). La rotation de la colonne de direction entraine donc la rotation de la roue principale (1000) qui entraîne à son tour la rotation des roues satellites aimantés (1001, 1002) qui induit l'évolution du signal au niveau des sondes magnétosensibles (1003, 1004). Sur plusieurs tours de rotation de la colonne de direction, il est ainsi possible d'obtenir une position angulaire absolue de cette colonne.

Il peut bien sûr être envisagé d'utiliser n'importe quelle variante de capteur de position selon l'invention avec n'importe quel dispositif de détection de position absolu, cet exemple de la figure 12 n'étant nullement limitatif dans sa réalisation.

La figure 13 présente le cas de réalisation où seulement une seule des pièces de collecte est coupée par le plan transversale (non montré) des sondes (300, 301). En effet seuls les prolongements (353, 354) de la pièce (60) et de la zone de collecte primaire (351) sont coupés par ce plan, le prolongement (312) de la pièce (50) et de la zone de collecte primaire (311) étant coplanaire avec ladite zone de collecte primaire (311).

La figure 14A présente un mode de réalisation de la liaison mécanique et magnétique entre les zones de collecte primaires (311, 351) et les zones de collecte secondaires (313, 363). Dans ce mode de réalisation, cette liaison est assurée par la coopération de formes de peigne complémentaires (3121, 3122 ; 3531, 3532) dans la zone des prolongements (312, 353). Un tel assemblage permet de réaliser le montage de l'ensemble collecteur par une méthode dite de « stacking » axiale.

La figure 14B présente un mode de réalisation alternatif de la liaison mécanique et magnétique entre les zones de collecte primaires (311, 351) et les zones de collecte secondaires (313, 363). Dans ce mode de réalisation, les zones de collecte secondaires (313, 363) présentent en leurs extrémités des parties recourbées en forme de U (3122, 3151) coopérant avec les extrémités planes (3121, 3532) des prolongements (312, 353) afin de réaliser une liaison par clipsage. Un tel assemblage permet un montage des collecteurs additionnels suivant un mouvement radiale.

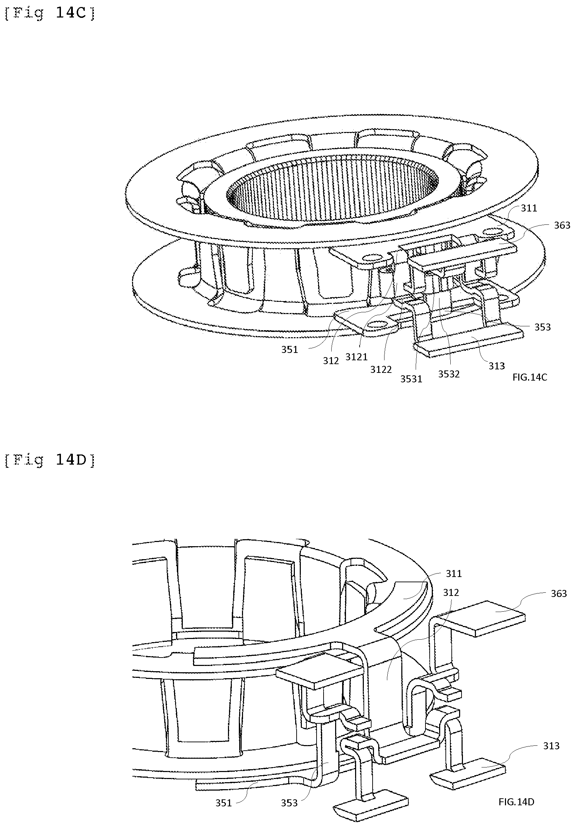

La figure 14C présente un mode de réalisation alternatif de la liaison mécanique et magnétique entre les zones de collecte primaires (311, 351) et les zones de collecte secondaires (313, 363). Dans ce mode de réalisation, les zones de collecte secondaires (313, 363) présentent en leurs extrémités des parties recourbées en forme de U (3122, 3151) coopérant avec les extrémités planes (3121, 3532) des prolongements (312, 353) afin de réaliser une liaison par clipsage. Ce mode de réalisation diffère du mode de réalisation précédent présenté en figure 14B, en ce que les parties recourbées en forme de U sont orientées dans la direction axiale. Un tel assemblage permet de réaliser le montage de l'ensemble collecteur par une méthode dite de « stacking » axiale.

La figure 14D présente un mode de réalisation alternatif de la liaison mécanique et magnétique entre les zones de collecte primaires (311, 351) et les zones de collecte secondaires (313, 363). Dans cette variante, les zones de collecte primaires et secondaires sont réalisées en une seule pièce par pliage d'une tôle au niveau des prolongements (312, 353). La liaison magnétique et mécanique entre les collecteurs est dans ce cas idéale.

La figure 14E présente un mode de réalisation alternatif de la liaison mécanique et magnétique entre les zones de collecte primaires (311, 351) et les zones de collecte secondaires (313, 363). Dans ce mode de réalisation, les zones de collecte secondaires (313, 363) présentent des extrémités planes (3122, 3151) coopérant avec les extrémités planes (3121, 3532) des prolongements (312, 353), la liaison entre les collecteurs étant ensuite assurée par une soudure au niveau de surface en contact. Dans cette variante, les collecteurs additionnels sont superposés sur les collecteurs principaux au niveau de l'entrefer de mesure.

La figure 15 présente un schéma en coupe suivant un plan orthogonal à la direction axiale. Ce schéma caricature les chemins du flux (111) provenant de ma structure magnétique aimantée rotorique (100) et des flux perturbateurs (111, 112) respectivement collectés par les zones de collecte primaire (310) et secondaire (363). Ce schéma met en évidence l'opposition des champs perturbateurs (111, 112) traversant la sonde (301), par couplage magnétique des deux pièces de collecte de flux (50, 60) au niveau de ladite sonde (301). L'annulation du champ perturbateur perçu par la sonde est obtenue par un dimensionnement des zones de collectes primaire (310) et secondaire (363).

## Revendications

1. - Capteur de position, notamment destiné à la détection de la torsion d'une colonne de direction, constitué d'une première structure magnétique aimantée rotorique (100) comprenant une pluralité d'aimants, d'une seconde structure statorique (200) comprenant deux couronnes (210, 250) prolongées de dents (212, 252) orientées axialement et imbriquées, et d'une troisième structure collectrice (300) fixe constituée de deux pièces de collecte de flux (50, 60) qui définissent au moins un entrefer dans lequel est placé au moins un élément magnéto sensible (301, 302), lesdites pièces de collecte de flux (50, 60) et lesdites couronnes dentées (210, 250) définissant entre elles une perméance magnétique indépendante de la position radiale et angulaire relative de ladite seconde structure statorique (200) par rapport à ladite troisième structure collectrice (300), lesdites pièces de collecte (50, 60) comprenant chacune un secteur angulaire de collecte (310, 350) dans lequel
- lesdites pièces de collecte (50, 60) comprennent chacune un secteur angulaire de collecte et présentent au moins une zone de collecte primaire (311, 351) continuée par au moins un prolongement présentant au moins une zone de collecte secondaire (313, 333, 363, 357, 358),
- lesdites zones de collecte secondaire (313, 333, 363, 357, 358) sont terminées par des épanouissements plans formant les deux pôles dudit entrefer et en ce que le plan médian transversal dudit entrefer coupe au moins un desdits prolongements,
**caractérisé en ce que**
- ladite zone de collecte primaire (311, 351) est positionnée d'un côté du plan médian transversal définissant l'entrefer
- et une zone de collecte secondaire (313, 333, 363, 357, 358) est positionnée de l'autre côté du plan médian transversal définissant l'entrefer, pour créer, par combinaison de deux pièces de collecte de flux (50, 60), une zone de rebroussement du champ magnétique inversant le sens du champ magnétique collecté traversant l'entrefer.

2. - Capteur de position selon la revendication 1 **caractérisé en ce que** ladite zones de collecte primaires (311) de la première pièce de collecte (50) et lesdites zones de collecte secondaires (357, 358, 363) de la deuxième pièce de collecte (60) ne sont pas perpendiculaires, ou ladite zone de collecte (351) de la deuxième pièce de collecte (60) et lesdites zones de collectes secondaires (313, 333) de la première pièce de collecte (50) ne sont pas perpendiculaires.

3. - Capteur de position selon la revendication 1 **caractérisé en ce que** ledit plan médian (P) est parallèle aux plans des zones de collecte primaires (311, 351).

4. - Capteur de position selon la revendication 3 **caractérisé en ce que** ledit prolongement (312, 353, 354) s'étend axialement et perpendiculairement au plan de ladite zone de collecte primaire (311) au-delà dudit plan médian transversal (P).

5. - Capteur de position selon la revendication 4 **caractérisé en ce que** ledit prolongement (312, 353, 354) est continué par une section plane formant une zone de collecte secondaire (313) parallèle au plan de la zone de collecte primaire (311).

6. - Capteur de position selon la revendication 5 **caractérisé en ce que** ladite zone de collecte secondaire (313, 357, 358) présente une forme parallélépipédique.

7. - Capteur de position selon la revendication 6 **caractérisé en ce que** deux côtés de ladite zone de collecte secondaire (313) sont prolongés par une patte (314, 315) orientée en direction du secteur angulaire de collecte (310,) et présentant un épanouissement plan (316, 317, formant un pôle dudit entrefer.

8. - Capteur de position selon la revendication 4 **caractérisé en ce que** l'une desdites zones de collecte primaire (350) est prolongée par au moins une zone de collecte secondaire (357, 358) s'étendant de part et d'autre du prolongement (312).

9. - Capteur de position selon la revendication 8 **caractérisé en ce qu'**au moins une desdites zones de collecte secondaire (357, 358) définit une zone de rebroussement avec des surfaces tangentes (355, 356) parallèles aux zones de collecte primaire (311, 351).

10. - Capteur de position selon la revendication 9 **caractérisé en ce que** ledit plan médian transversal (P) s'étend entre la zone de collecte primaire (351) et lesdites surfaces tangentes (355, 356).

11. - Capteur de position selon la revendication 10 **caractérisé en ce que** lesdites surfaces tangentes (355, 356) se prolongent en direction de l'entrefer et de la zone de collecte primaire (351) se terminant par un épanouissement (359, 360) pour former le deuxième pôle des entrefers.

12. - Capteur de position selon la revendication 1 **caractérisé en ce que** ladite troisième structure collectrice (300) comprend deux zones de collecte secondaire (333, 363),
- la première zone de collecte secondaire (333) étant placée dans un plan parallèle au plan de ladite zone de collecte primaire (311) auquel elle est couplée magnétiquement par l'intermédiaire de la zone de collecte secondaire (313) dont une extrémité frontale définit un des pôles de l'entrefer, ledit plan médian transversal (P) de l'entrefer étant situé entre cette première zone de collecte secondaire (333) et ladite zone de collecte primaire (311),
- la deuxième zone de collecte secondaire (363) étant placée dans un plan parallèle au plan de ladite zone de collecte primaire (351) auquel elle est couplée magnétiquement par l'intermédiaire d'épanouissements plan (359, 360) dont une extrémité frontale définit l'autre des pôles de l'entrefer, ledit plan médian transversal (P) de l'entrefer étant situé entre cette première zone de collecte secondaire (363) et ladite zone de collecte primaire (351).

13. - Capteur de position selon la revendication 1 **caractérisé en ce que** la surface totale de la zone de collecte secondaire (313, 333, 363, 357, 358) est égale à la surface totale de la zone de collecte primaire (311, 351, 312, 353, 354).

14. - Dispositif de détection de position absolue d'une colonne de direction comprenant un arbre de torsion et un capteur de position **caractérisé en ce que** ledit capteur de position est conforme à la revendication 1.

## Patentansprüche

1. Positionssensor, insbesondere für die Erfassung der Torsion einer Lenksäule, bestehend aus einer ersten rotorartigen Magnetstruktur (100), die eine Vielzahl von Magneten umfasst, einer zweiten statorartigen Struktur (200), die zwei mit Zähnen (212, 252) verlängerte, axial ausgerichtete und ineinander eingreifende Kränze (210, 250) umfasst, und einer dritten Sammelstruktur (300), die ortsfest ist, bestehend aus zwei Flusssammelteilen (50, 60), die mindestens einen Luftspalt definieren, in dem mindestens ein magnetisch sensibles Element (301, 302) platziert ist, wobei die Flusssammelteile (50, 60) und die Zahnkränze (210, 250) miteinander eine magnetische Durchlässigkeit definieren, die unabhängig von der relativen radialen und winkligen Position der zweiten statorartigen Struktur (200) in Bezug auf die dritte Sammelstruktur (300) ist, wobei die Sammelteile (50, 60) jeweils einen winkelförmigen Sammelabschnitt (310, 350) umfassen, wobei
- die Sammelteile (50, 60) jeweils einen winkelförmigen Sammelabschnitt umfassen und mindestens eine primäre Sammelzone (311, 351) aufweisen, die durch mindestens eine Verlängerung fortgesetzt wird, die mindestens eine sekundäre Sammelzone (313, 333, 363, 357, 358) aufweist,
- die sekundären Sammelzonen (313, 333, 363, 357, 358) in ebenen Erweiterungen enden, die die beiden Pole des Luftspalts bilden, und dass die Quermittelebene des Luftspalts mindestens eine der Verlängerungen schneidet,
**dadurch gekennzeichnet, dass:**
- die primäre Sammelzone (311, 351) auf einer Seite der den Luftspalt definierenden Quermittelebene positioniert ist
- und eine sekundäre Sammelzone (313, 333, 363, 357, 358) auf der anderen Seite der den Luftspalt definierenden Quermittelebene positioniert ist, um durch Kombination von zwei Flusssammelteilen (50, 60) eine Magnetfeldumkehrzone zu schaffen, die die Richtung des gesammelten Magnetfelds, das den Luftspalt durchquert, invertiert.

2. Positionssensor nach Anspruch 1, **dadurch gekennzeichnet, dass** die primäre Sammelzone (311) des ersten Sammelteils (50) und die sekundären Sammelzonen (357, 358, 363) des zweiten Sammelteils (60) nicht rechtwinklig sind, oder die Sammelzone (351) des zweiten Sammelteils (60) und die sekundären Sammelzonen (313, 333) des ersten Sammelteils (50) nicht rechtwinklig sind.

3. Positionssensor nach Anspruch 1, **dadurch gekennzeichnet, dass** die Mittelebene (P) parallel zu den Ebenen der primären Sammelzonen (311, 351) ist.

4. Positionssensor nach Anspruch 3, **dadurch gekennzeichnet, dass** sich die Verlängerung (312, 353, 354) axial und rechtwinklig zur Ebene der primären Sammelzone (311) über die Quermittelebene (P) hinaus erstreckt.

5. Positionssensor nach Anspruch 4, **dadurch gekennzeichnet, dass** die Verlängerung (312, 353, 354) durch einen ebenen Abschnitt fortgesetzt wird, der eine sekundäre Sammelzone (313) bildet, die parallel zur Ebene der primären Sammelzone (311) verläuft.

6. Positionssensor nach Anspruch 5, **dadurch gekennzeichnet, dass** die sekundäre Sammelzone (313, 357, 358) eine Parallelepipedform aufweist.

7. Positionssensor nach Anspruch 6, **dadurch gekennzeichnet, dass** zwei Seiten der sekundären Sammelzone (313) durch eine Lasche (314, 315) verlängert sind, die in Richtung des winkelförmigen Sammelabschnitts (310) ausgerichtet ist und eine ebene Erweiterung (316, 317) aufweist, die einen Pol des Luftspalts bildet.

8. Positionssensor nach Anspruch 4, **dadurch gekennzeichnet, dass** eine der primären Sammelzonen (350) durch mindestens eine sekundäre Sammelzone (357, 358) verlängert ist, die sich auf beiden Seiten der Verlängerung (312) erstreckt.

9. Positionssensor nach Anspruch 8, **dadurch gekennzeichnet, dass** mindestens eine der sekundären Sammelzonen (357, 358) eine Umkehrzone mit tangentialen Oberflächen (355, 356) definiert, die parallel zu den primären Sammelzonen (311, 351) verlaufen.

10. Positionssensor nach Anspruch 9, **dadurch gekennzeichnet, dass** die Quermittelebene (P) sich zwischen der primären Sammelzone (351) und den tangentialen Oberflächen (355, 356) erstreckt.

11. Positionssensor nach Anspruch 10, **dadurch gekennzeichnet, dass** die tangentialen Oberflächen (355, 356) sich in Richtung des Luftspalts und der primären Sammelzone (351), die in einer Erweiterung (359, 360) endet, verlängern, um den zweiten Pol der Luftspalte zu bilden.

12. Positionssensor nach Anspruch 1, **dadurch gekennzeichnet, dass** die dritte Sammelstruktur (300) zwei sekundäre Sammelzonen (333, 363) umfasst,
- wobei die erste sekundäre Sammelzone (333) in einer Ebene parallel zur Ebene der primären Sammelzone (311) platziert ist, an die sie magnetisch mittels der sekundären Sammelzone (313) gekoppelt ist, von der ein vorderes Ende einen der Pole des Luftspalts definiert, wobei sich die Quermittelebene (P) des Luftspalts zwischen dieser ersten sekundären Sammelzone (333) und der primären Sammelzone (311) befindet,
- wobei die zweite sekundäre Sammelzone (363) in einer Ebene parallel zur Ebene der primären Sammelzone (351) platziert ist, an die sie magnetisch mittels ebener Erweiterungen (359, 360) gekoppelt ist, von denen ein vorderes Ende den anderen der Pole des Luftspalts definiert, wobei sich die Quermittelebene (P) des Luftspalts zwischen dieser ersten sekundären Sammelzone (363) und der primären Sammelzone (351) befindet.

13. Positionssensor nach Anspruch 1, **dadurch gekennzeichnet, dass** die Gesamtoberfläche der sekundären Sammelzone (313, 333, 363, 357, 358) gleich der Gesamtoberfläche der primären Sammelzone (311, 351, 312, 353, 354) ist.

14. Vorrichtung zur Erfassung der absoluten Position einer Lenksäule, die eine Torsionswelle und einen Positionssensor umfasst,
**dadurch gekennzeichnet, dass** der Positionssensor Anspruch 1 entspricht.

## Claims

1. A position sensor, in particular intended for detecting the torsion of a steering column, consisting of a first magnetized magnetic rotor structure (100) comprising a plurality of magnets, a second stator structure (200) comprising two rings (210, 250) extended by teeth (212, 252) which are axially oriented and interlocked, and a third stationary collector structure (300) consisting of two flux collection parts (50, 60) which define at least one air gap in which at least one magnet-sensitive element (301, 302) is placed, said flux collection parts (50, 60) and said toothed rings (210, 250) defining therebetween a magnetic permeance independent of the relative radial and angular position of said second stator structure (200) with respect to said third collector structure (300), said collection parts (50, 60) each comprising an angular collection sector (310, 350), wherein
- said collection parts (50, 60) each comprise an angular collection sector and have at least one primary collection zone (311, 351) continued by at least one prolongation having at least one secondary collection zone (313, 333, 363, 357, 358),
- said secondary collection zones (313, 333, 363, 357, 358) are terminated by flat extensions forming the two poles of said air gap, and in that the transverse median plane of said air gap intersects at least one of said prolongations,
**characterized in that**
- said primary collection zone (311, 351) is positioned on one side of the transverse median plane defining the air gap
- and a secondary collection zone (313, 333, 363, 357, 358) is positioned on the other side of the transverse median plane defining the air gap to create, by combining two flux collection parts (50, 60), a blocking zone of the magnetic field that reverses the direction of the collected magnetic field passing through the air gap.

2. The position sensor according to claim 1, **characterized in that** said primary collection zones (311) of the first collection part (50) and said secondary collection zones (357, 358, 363) of the second collection part (60) are not perpendicular, or said collection zone (351) of the second collection part (60) and said secondary collection zones (313, 333) of the first collection part (50) are not perpendicular.

3. The position sensor according to claim 1, **characterized in that** said median plane (P) is parallel to the planes of the primary collection zones (311, 351).

4. The position sensor according to claim 3, **characterized in that** said prolongation (312, 353, 354) extends axially and perpendicular to the plane of said primary collection zone (311) beyond said transverse median plane (P).

5. The position sensor according to claim 4, **characterized in that** said prolongation (312, 353, 354) is continued by a flat section forming a secondary collection zone (313) parallel to the plane of the primary collection zone (311).

6. The position sensor according to claim 5, **characterized in that** said secondary collection zone (313, 357, 358) has a parallelepipedal shape.

7. The position sensor according to claim 6, **characterized in that** two sides of said secondary collection zone (313) are extended by a tab (314, 315) oriented in the direction of the angular collection sector (310) and exhibiting a flat extension (316, 317), forming a pole of said air gap.

8. The position sensor according to claim 4, **characterized in that** one of said primary collection zones (350) is extended by at least one secondary collection zone (357, 358) extending on either side of the prolongation (312).

9. The position sensor according to claim 8, **characterized in that** at least one of said secondary collection zones (357, 358) defines a reversal region with tangent surfaces (355, 356) parallel to the primary collection zones (311, 351).

10. The position sensor according to claim 9, **characterized in that** said transverse median plane (P) extends between the primary collection zone (351) and said tangent surfaces (355, 356).

11. The position sensor according to claim 10, **characterized in that** said tangent surfaces (355, 356) extend in the direction of the air gap and of the primary collection zone (351) ending in an extension (359, 360) to form the second pole of the air gaps.

12. The position sensor according to claim 1, **characterized in that** said third collector structure (300) comprises two secondary collection zones (333, 363),
- the first secondary collection zone (333) being placed in a plane parallel to the plane of said primary collection zone (311), to which it is magnetically coupled via the secondary collection zone (313), a front end of which defines one of the poles of the air gap, said transverse median plane (P) of the air gap being located between this first secondary collection zone (333) and said primary collection zone (311),
- the second secondary collection zone (363) being placed in a plane parallel to the plane of said primary collection zone (351), to which it is magnetically coupled by means of flat extensions (359, 360), one front end of which defines the other of the poles of the air gap, said transverse median plane (P) of the air gap being situated between this first secondary collection zone (363) and said primary collection zone (351).

13. The position sensor according to claim 1, **characterized in that** the total area of the secondary collection zone (313, 333, 363, 357, 358) is equal to the total area of the primary collection zone (311, 351, 312, 353, 354).

14. A device for detecting absolute position of a steering column comprising a torsion shaft and a position sensor, **characterized in that** said position sensor is in accordance with claim 1.
